# EUROPÄISCHE PATENTSCHRIFT

(11) **EP 0 941 603 B1**
(45) Veröffentlichungstag und Bekanntmachung des Hinweises auf die Patenterteilung: **21.01.2004**
(21) Anmeldenummer: 97947025.9
(22) Anmeldetag: 27.10.1997
(51) Int. Cl.: H04N 5/44

(54) **VERFAHREN UND SCHALTUNGSANORDNUNG ZUM ERZEUGEN EINER FOLGE VON PROGRESSIVEN BILDERN**
METHOD AND CIRCUIT CONFIGURATION FOR PRODUCING A SERIES OF PROGRESSIVE PICTURES
PROCEDE ET CONFIGURATION DE CIRCUIT POUR GENERER UNE SERIE D'IMAGES PROGRESSIVES

(30) Priorität: 29.11.1996 DE 19649651
(43) Veröffentlichungstag der Anmeldung: 15.09.1999
(73) Patentinhaber: Micronas Munich GmbH, 81541 München (DE)
(72) Erfinder: SCHU, Markus, D-85435 Erding (DE); SCHEFFLER, Günter, D-80939 München (DE)
(74) Vertreter: Patentanwälte Westphal, Mussgnug & Partner
(86) Internationale Anmeldenummer: PCT/DE1997/002496
(87) Internationale Veröffentlichungsnummer: WO 1998/024233

(56) Entgegenhaltungen:
- EP-A- 0 318 760
- EP-A- 0 598 333
- DE-A- 4 220 662
- DE-C- 4 434 728

## Beschreibung

Die Erfindung betrifft ein Verfahren zum Umsetzen einer Eingangsbildfolge aus zeilenverkämmten Halbbildern mit einer ersten Wiederholfrequenz auf eine Ausgangsbildfolge aus progressiven Bildern mit einer zweiten, im Vergleich zur ersten verdoppelten Wiederholfrequenz. Die Erfindung betrifft außerdem eine Schaltungsanordnung für eine solche Umsetzung.

Zur Erzeugung eines möglichst flimmerbefreiten Fernsehbildes sehen bisherige Lösungsansätze die Umsetzung des senderseitig übertragenen Signals, welches zeilenverkämmte Halbbilder mit 50 bzw. 60 Hz Halbbildwiederholfrequenz enthält, auf eine Halbbildfolge mit 100 bzw. 120 Hz Halbbildwiederholfrequenz vor. Eine derartige Umsetzung ist beispielsweise in der EP-A2-0 727 904 beschrieben. Andere Verfahren sehen eine Umsetzung auf eine Bildfolge aus progressiven Bildern mit 50 bzw. 60 Hz Bildwiederholfrequenz vor, wobei die progressiven Bilder die vollständige Zeilenanzahl enthalten, wie beispielsweise in der EP-A2-0 679 022 beschrieben.

Sowohl bei Halbbildfolgen mit 100/120 Hz als auch bei progressiven Bildfolgen mit 50/60 Hz bleiben Flimmereffekte noch wahrnehmbar. Im ersteren Fall ist das Kantenflimmern zwar reduziert, aber nicht vollständig beseitigt. Außerdem kann noch Zeilenwandern auftreten. Bei letzterer Methode ist das Großflächenflimmern nicht vollständig unterdrückt.

Die EP 0 318 760 A2 beschreibt zwei Verfahren zur Erzeugung einer Vollbildfolge aus einer Halbbildfolge, wobei die Vollbildfolge die doppelte Wiederholfrequenz wie die Halbbildfolge aufweist. Bei einem ersten Verfahren, bei dem eine gute Bewegungswiedergabe erzielt werden soll, ist dabei vorgesehen, zu jedem Eingangshalbbild durch vertikale Interpolation ein Zwischenhalbbild zu erzeugen, wobei zur Erzeugung eines Vollbildes jeweils eines der Eingangshalbbilder und eines der Zwischenhalbbilder miteinander kombiniert werden.

Die Aufgabe der Erfindung besteht darin, ein Verfahren sowie eine Schaltungsanordnung anzugeben, die eine verbesserte Flimmerbefreiung liefern.

Erfindungsgemäß wird diese Aufgabe durch ein Verfahren nach den Merkmalen des Patentanspruchs 1 gelöst.

In bezug auf die Schaltungsanordnung wird diese Aufgabe durch eine Anordnung nach den Merkmalen des Patentanspruchs 7 gelöst.

Da die Bildwiederholfrequenz des progressiven Bildes gemäß der Erfindung die doppelte Eingangsfrequenz ist, also 100 bzw. 120 Hz, liegen Kanten- und Großflächenflimmern außerhalb des für die Flimmerwahrnehmung des menschlichen Auges verantwortlichen Spektrums und werden vom menschlichen Auge nicht mehr wahrgenommen. Das Bild ist folglich fast vollkommen flimmerfrei.

Die Umsetzung auf die Zwischenbildfolge bzw. das Zwischenbildsignal mit zeilenverkämmten Halbbildern der doppelten Eingangshalbbildfrequenz ist an sich bekannt, so daß entsprechende schaltungstechnische Realisierungen standardgemäß zur Verfügung stehen. Der davon ausgehende Umsetzungsschritt zu progressiven Bildern mit der doppelten Wiedergabefrequenz erfordert nur relativ einfache Filteroperationen, wie z.B. Medianfilterung, insbesondere aber keinen zusätzlichen Bildspeicheraufwand. Gegebenenfalls zu verwendende Bewegungsinformation liegt bereits aus den bekannten Umsetzungsverfahren auf die Zwischenbildfolge vor und kann für die anschließende progressive Konversion übernommen werden.

Nachfolgend wird die Erfindung anhand der in der Zeichnung dargestellten Figuren näher beschrieben. Es zeigen:
- Figur 1: ein Blockschaltbild zur Realisierung der vorliegenden Erfindung,
- Figur 2: Umsetzungsschritte für den niederfrequenten Signalanteil und
- Figur 3: Umsetzungsschritte für den hochfrequenten Signalanteil.

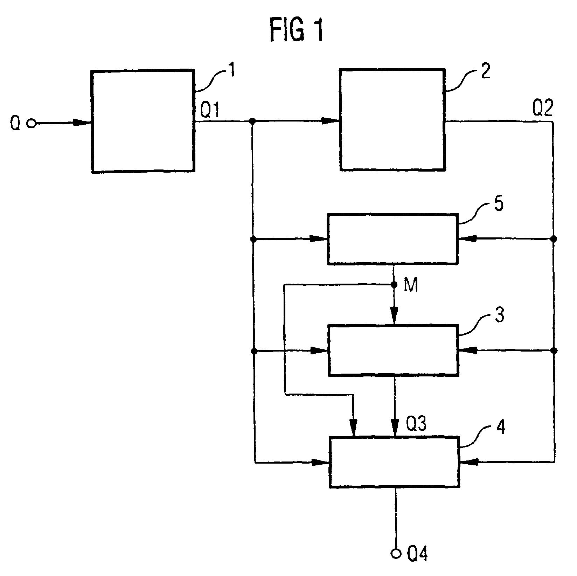

Das eingangsseitige Bildsignal Q des in Figur 1 dargestellten Prinzipschaltbilds enthält zeilenverkämmte Halbbilder im Abstand von 20 ms (50 Hz Halbbildwiederholf requenz). Das erste Halbbild A-1 enthält beispielsweise die ungeradzahligen Zeilen, das zweite Halbbild B1 die geradzahligen Zeilen, d.h. die Halbbilder sind zeilenverkämmt. Die Folge umfaßt somit die Halbbilder A1, B1, A2, ... Das Videosignal Q wird in einem Halbbildspeicher 1 zwischengespeichert. Ausgangsseitig. wird mit verdoppelter Halbbildfrequenz bzw. Zeilenfrequenz ausgelesen. Das Videosignal Q1 weist die Halbbildfolge A1, A1, B1, B1, A2, A2, ... auf. Es wird in einem weiteren Halbbildspeicher 2 verzögert. Das diesbezüglich ausgangsseitige Videosignal Q2 weist die entsprechende Halbbildfolge, jedoch um ein Halbbild verzögert auf.

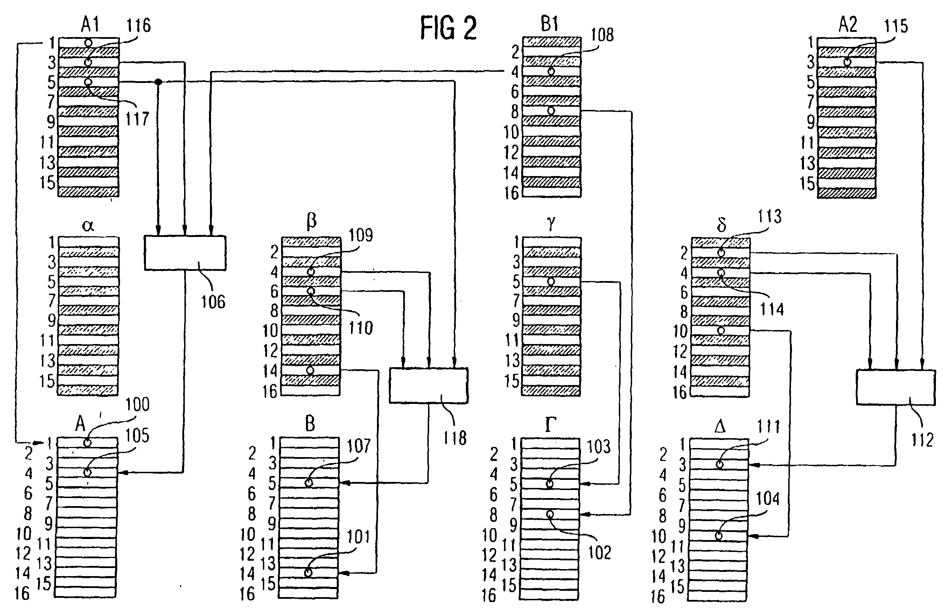

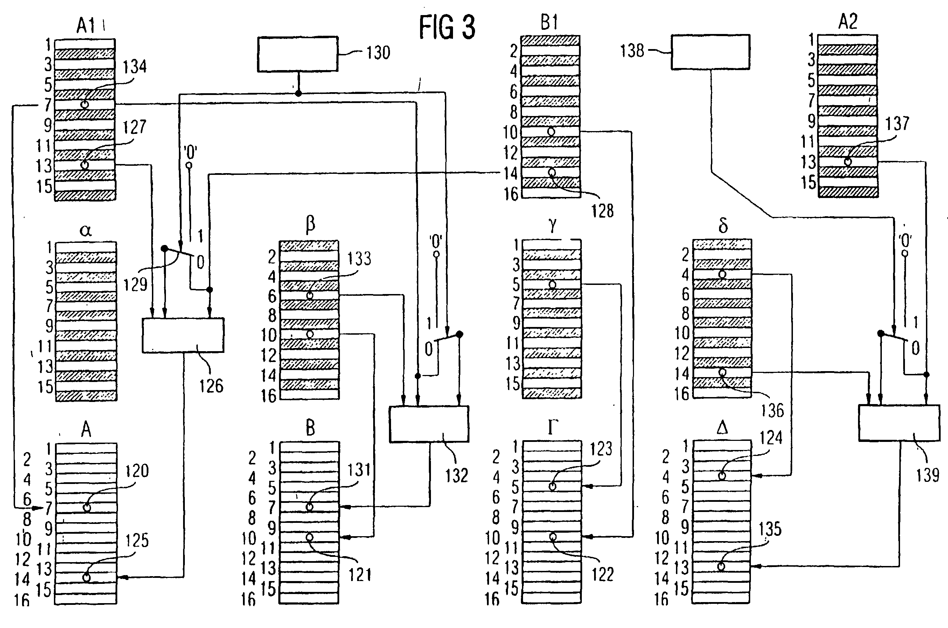

Die Signale Q1, Q2 werden einer Einrichtung 3 zugeführt, durch die eine - wie in den Figuren 2 und 3 detaillierter beschriebene - Umsetzung der Halbbildfolge des eingangsseitigen Videosignals Q auf eine Zwischenbildfolge des Zwischenbildsignals Q3 durchgeführt wird; welches zeilenverkämmte Halbbilder mit 100 Hz Wiederholfrequenz aufweist. Durch die Einrichtung 3 werden die Halbbilder raster- und bewegungsphasenrichtig aus den Signalen Q1, Q2 erzeugt. Die Umsetzung erfolgt zweckmäßigerweise bewegungskompensiert. Hierzu ermittelt ein Bewegungsschätzer 5 bildpunktweise für aufeinanderfolgende Halbbilder (zwischen A1, B1; zwischen B1, A2, etc.) Bewegungsvektoren und führt diese der Einrichtung 3 zu.

Aus dem Zwischenvideosignal Q3 sowie den bereits in der 100Hz-Ebene vorliegenden Signalen Q1, Q2 wird in einer Umsetzungeinrichtung 4 das ausgangsseitig abgreifbare Videosignal Q4 erzeugt, welches progressive Bilder mit 100 Hz Wiederholfrequenz aufweist. Um die Umsetzung aus den Videosignalen Q1, Q2, Q3 zweckmäßigerweise bewegungskompensiert durchzuführen, werden der Einrichtung 4 außerdem die Bewegungsvektoren M zugeführt.

Vorteilhafterweise wird der Höhen- und Tiefensignalanteil bei der Umsetzung sowohl auf das Zwischensignal Q3 als auch auf das progressive Ausgangssignal Q4 für den Höhen- und Tiefensignalanteil getrennt durchgeführt. Hierzu wird das eingangsseitige Videosignal in einen Höhen- und einen Tiefensignalanteil aufgespaltet, anschließend eine getrennte Signalverarbeitung im Höhen- und Tiefenkanal durchgeführt, und dann werden die Umsetzungsergebnisse additiv wieder zusammengefaßt.

Im Tiefenkanal wird die in Figur 2 dargestellte Umsetzung durchgeführt. Aus der eingangsseitigen, zeilenverkämmten Halbbildfolge A1, B1, A2 wird die Zwischenhalbbildfolge α, β, γ, δ mit zeilenverkämmten Halbbildern bei verdoppelter Halbbildwiederholfrequenz erzeugt. Die dunkel dargestellten Zeilen sind in den jeweiligen Halbbildern nicht belegt. Aufeinander folgende Halbbilder weisen Zeilen unterschiedlicher Rasterlage auf. Das Halbbild α enthält die geradzahligen Zeilen 1, 3, 5, ..., das Halbbild β die ungeradzahligen Zeilen, das Halbbild γ die geradzahligen Zeilen etc. Zur Umsetzung der Halbbilder A1, B1, A2 auf die Zwischenbildfolge α, β, γ, δ werden diese Halbbilder raster- und bewegungsphasenrichtig erzeugt. Hierzu eignet sich beispielsweise das in der eingangs genannten EP-A2-0 727 904 anhand der Figuren 5 bis 7 beschriebene Verfahren für den Tiefenkanal. Das Halbbild α wird durch direkte Übernahme des Halbbilds A1 erzeugt, die Halbbilder β und δ durch eine jeweils unterschiedliche Medianfilterung aus den Halbbildern A1, B1 bzw. B1 A2, und das Halbbild γ durch eine Rasterumsetzung, z.B. eine Zwischenzeileninterpolation, aus dem Halbbild B1. Die Umsetzung wird durch die Einrichtung 3 (Figur 1) durchgeführt.

Im Tiefenkanal wird außerdem aus den eingangsseitigen Halbbildern A1, B1, A2 sowie den Halbbildern α, β, γ, δ der Zwischenbildfolge die Ausgangsbildfolge A, B, Γ, Δ aus progressiven Bildern wie in Figur 2 dargestellt erzeugt. Jeder der Bewegungsphasen der Zwischenbildfolge, die durch die Halbbilder α, β, γ, δ dargestellt sind, ist ein entsprechendes progressives Ausgangsbild zugeordnet. Darüber hinaus sind die Bewegungsphasen der Bilder α, A und γ, Γ der Bewegungsphase der eingangsseitigen Halbbilder A1 bzw. B1 zugeordnet; die Bewegungsphase der Bilder β, B liegt zwischen diesen oben genannten Bewegungsphasen, die Bewegungsphase der Bilder δ, Δ liegt nach diesen oben genannten Bewegungsphasen und zwischen den Bewegungsphasen der Halbbilder B1, A2.

Die Zusammensetzung der progressiven Bilder erfolgt allgemein derart, daß zu erzeugende Bildpunkte, für die entsprechende Bildpunkte in rastergleichen Zeilen der Halbbilder der gleichen Bewegungsphase der Eingangsbildfolge oder der Zwischenbildfolge vorliegen, unverändert übernommen werden. Für die Beispiele ist angenommen, daß die Bewegungsvektoren M Null sind. Beispielsweise wird der Bildpunkt 100 der Zeile 1 des progressiven Bilds A an der entsprechenden Stelle der Zeile 1 des Halbbilds A1 entnommen oder alternativ der entsprechenden Stelle des Halbbilds α, da nach dem in der EP-A2-0 727 904 beschriebenen Verfahren die Halbbilder A1 und α gleich sind. Der Bildpunkt 101 des progressiven Bilds B in dessen Zeile 14 wird an der entsprechenden Bildpunktstelle in der Zeile 14 des Zwischenhalbbilds β entnommen. Entsprechendes gilt für den Bildpunkt 104 im progressiven Bild Δ sowie für die Bildpunkte 102, 103 im progressiven Bild r, wobei die bewegungsphasengleichen Halbbildern B1, γ beide Rasterlagen zur Verfügung stellen.

Für die übrigen Rasterlagen der progressiven Bilder A, B, Δ, für die in den bewegungsphasengleichen Halbbildern keine Bildpunkte entsprechender Rasterlage vorliegen, wird jeweils ein Bildpunkt durch eine geeignete Filtermaßnahme erzeugt. Der Bildpunkt 105 im progressiven Bild A in dessen Zeile 4 findet keine Entsprechung in den Halbbildern Al oder α, da dort diese Bildzeilen nicht besetzt sind. Der Bildpunkt 105 wird deshalb durch einen Filtervorgang 106 erzeugt. Die Filterung 106 ist vorzugsweise eine Medianfilterung mit drei Eingangssignalen. Dem Medianfilter 106 werden diejenigen Bildpunkte des eingangsseitigen Halbbilds A1 bzw. des Zwischenhalbbilds α zugeführt, die der dort dem Bildpunkt 105 entsprechenden Bildpunktstelle unmittelbar benachbart liegen, d.h. in den unmittelbar darüber und darunter liegenden Zeilen 3, 6. Im Halbbild A1 sind diese Bildpunkte mit 116, 117 bezeichnet. Außerdem wird dem Medianfilter 106 derjenige Bildpunkt zugeführt, der an der dem Bildpunkt 105 entsprechenden Bildpunktstelle der gleichen Rasterlage im am nächsten benachbart liegenden Eingangshalbbild liegt. Dies ist der Bildpunkt 108 in der Zeile 4 des Halbbilds B1.

Der Bildpunkt 107 des progressiven Bilds B wird durch eine Medianfilterung 118 erzeugt, der eingangsseitig die Bildpunkte 109, 110 zugeführt werden, die der der Bildpunktstelle 107 im Halbbild β entsprechenden Bildpunktstelle benachbart liegen, sowie der Bildpunkt 117 des Halbbilds A1, der die Rasterlage des Halbbilds B hat und in der Bewegungsphase unmittelbar vorher liegt.

Der Bildpunkt 111 des Halbbilds Δ wird durch ein Medianfilter 112 erzeugt. Diesem Medianfilter werden eingangsseitig die Bildpunkte 113, 114 zugeführt, die der dort dem Bildpunkt 111 entsprechenden Bildpunktstelle im anderen Zeilenraster unmittelbar benachbart liegen, sowie der Bildpunkt 115, der im Halbbild A2 an der der Bildpunktstelle 111 entsprechenden Stelle der gleichen Rasterlage liegt. Das Halbbild A2 ist dabei dasjenige eingangsseitige Halbbild, das in der Bewegungsphase dem progressiven Bild Δ am nächsten liegt und im Vergleich zum Bildpunkt 111 Bildpunkte gleicher Rasterlage aufweist.

Die Medianfilterungen 106, 118, 112 im Tiefenkanal wirken qualitativ derart, daß bei geringer oder nicht vorliegender Bewegung mit höherer Wahrscheinlichtkeit der jeweils rastergleiche, aber aus einer benachbarten Bewegungsphase entnommene Bildpunkt ausgewählt wird, während bei Vorliegen von Bewegung einer der aus der gleichen Bewegungsphase, aber der anderen Rasterlage entnommenen Bildpunkte ausgewählt wird. Bei Bewegung dominiert somit bewegungsphasenrichtiger Charakter der Bildpunkterzeugung, bei Nichtvorliegen von Bewegung der rasterrichtige Charakter.

Die Umsetzungsschritte für den Höhenkanal sind in Figur 3 dargestellt. Die Zwischenbildfolge α, β, γ, δ für den Tiefenkanal wird beispielsweise anhand des in der EP-A2-0 727 904 im Zusammenhang mit den Figuren 2 bis 4 beschriebenen Verfahrens erzeugt. Entsprechend der Figur 2 werden solche Bildpunkte der progressiven Vollbilder, für die in den bewegungsphasengleichen Halbbildern rastergleiche Bildpunkte vorliegen, durch diese gebildet. Dies sind die Bildpunkte 120, ..., 124. Die anderen Bildpunkte werden wiederum durch eine Medianfilterung erzeugt.

Der Bildpunkt 125 des progressiven Bilds A wird durch eine Medianfilterung 126 gebildet. Dem Medianfilter 126 wird eingangsseitig der Bildpunkt 127 des Halbbilds A1 oder der entsprechende Bildpunkt des gleichen Halbbilds α zugeführt, der der entsprechenden Bildpunktstelle des Bildpunkts 125 im Halbbild A1 im anderen Raster benachbart liegt. Ein anderer Eingangswert 128 des Medianfilters 126 liegt im bewegungsphasennächsten Halbbild B1 an der gleichen Bildpunktstelle wie der Bildpunkt 125. Wenn zwischen den Halbbildern A1, B1 keine oder wenig Bewegung vorliegt, wird der Bildpunkt 128. dem Medianfilter 126 zweifach zugeführt, indem ein Umschalter 129 in die Stellung "0" gebracht wird. Die Bewegung wird durch eine Bewegüngsdetektion 130 ermittelt, indem die vom Bewegungsvektorschätzer 5 (Figur 1) bereitgestellten Bewegungsvektoren ausgewertet werden, wobei beispielsweise ein Schwellwertvergleich durchgeführt wird. Bei Vorliegen von Bewegung (Schalterstellung "1") wird anstelle des Bildpunkts 128 ein konstanter Wert, z.B. "0", dem Medianfilter 126 zugeführt.

Im progressiven Bild B wird der Bildpunkte 131 durch eine Medianfilterung 132 erzeugt, da im bewegungsphasengleichen Halbbild β Bildpunkte dieser Rasterlage nicht vorhanden sind. Dem Medianfilter 132 wird hierzu der im Halbbild β in der anderen Rasterlage an entsprechender Stelle benachbart liegende Bildpunkt 133 zugeführt sowie der an der entsprechenden Stelle der gleichen Rasterlage liegende Bildpunkte 134 des Halbbilds A1. Bei nicht vorliegender Bewegung wird gesteuert durch die Bewegungsdetektion 130 dieser Bildpunkte dem Medianfilter 132 doppelt zugeführt, bei vorliegender Bewegung wird anstelle dessen der konstante Wert "0" zugeführt und der Bildpunkt 134 in einfacher Gewichtung.

Im progressiven Bild r werden die Bildpunkte 122, 123 den bewegungsphasengleichen Halbbildern B1 bzw. y an der jeweils entsprechenden Bildpunktstelle mit der gleichen Rasterlage entnommen.

Im progressiven Bild Δ wird der Bildpunkt 135 durch eine Medianfilterung 139 erzeugt. Ein Eingangswert des Medianfilters 139 wird dem bewegungsphasengleichen Halbbild δ an einer Stelle 136 entnommen, die der Bildpunktstelle 135 in der anderen Rasterlage unmittelbar benachbart liegt. Außerdem wird dem Medianfilter 139 der Bildpunkt 137 des Halbbilds A2 zugeführt, der an der der Bildpunktstelle 135 entsprechenden Stelle in der gleichen Rasterlage liegt, wobei das Halbbild A2 dasjenige eingangsseitige Halbbild ist, welches dem progressiven Bild δ am nächsten benachbart liegt und Bildpunkte mit der zum Bildpunkt 135 gleichen Rasterlage enthält. Abhängig von der durch die Bewegungsfeststellung 138 zwischen den eingangsseitigen Halbbildern B1, A2 festgestellten Bewegung wird der Bildpunkt 137 doppelt zugeführt (keine Bewegung) oder einfach zugeführt, wobei außerdem der konstante Wert "0" eingespeist wird (Bewegung).

Die an den Medianfiltern 126, 132, 139 ansetzende Bewegungssteuerung bewirkt, daß bei kleiner oder geringer Bewegung eingangsseitig die zum zu erzeugenden Bildpunkt rastergleichen, aber aus benachbarter Bewegungsphase stammenden Bildpunkte dominieren. Bei vorliegender Bewegung hingegen steht Bildpunkt am Eingang des Medianfilters einer zum zu erzeugenden Bildpunkt in der anderen Rasterlage benachbart liegender Bildpunkt und der in benachbarter Bewegungsphase rastergleiche in Konkurrenz. Folglich wird durch die Medianfilter ohne Bewegung ein rastergleicher Bildpunkt bevorzugt, bei Bewegung derjenige, welcher sich am besten in die Bildumgebung einpaßt.

Während die eingangsseitige Bildpunktrate des Videosignals Q bzw. der Eingangsbilder A1, B1, A2, ... bei 50 Hz Bildwiederholfrequenz 13,5 MHz beträgt, liegt die Bildpunktrate für die progressive Bildfolge bei 54 MHz. Die Zeilenablenkfrequenz beträgt eingangsseitig 15625 Hz, ausgangsseitig 62500 Hz. Diese Frequenzen sind heute unter anderem in Computer-Monitoren ohne weiteres verarbeitbar.

## Patentansprüche

1. Verfahren zum Umsetzen einer Eingangsbildfolge (Q) aus zeilenverkämmten Halbbildern (A1, B1, A2) mit einer ersten Wiederholfrequenz auf eine Ausgangsbildfolge (Q4) aus progressiven Bildern (A, B, Γ, Δ) mit einer zweiten, im Vergleich zur ersten Wiederholfrequenz verdoppelten Wiederholfrequenz, bei dem
- aus der Eingangsbildfolge (A1, B1, A2) eine Zwischenbildfolge (α, β, γ, δ) aus zeilenverkämmten Halbbildern mit der zweiten Wiederholfrequenz gebildet wird, wobei zu jedem Eingangsbild (A1; B1) zwei Zwischenbilder (α, β; γ, δ) erzeugt werden, von denen eines (α; γ) aus dem Eingangsbild (A1; B1) gebildet wird und von denen das andere (β) durch eine Medianfilterung zweier aufeinander folgender Eingangshalbbilder (A1, B1) gebildet wird,
- aus den Halbbildern der Zwischenbildfolge (α, β, γ, δ) und den Halbbildern der Eingangsbildfolge (A1, B1, A2) durch eine eine Medianfilterung umfassende Filtermaßnahme die progressiven Bilder der Ausgangsbildfolge (A, B, Γ, Δ) gebildet werden.

2. Verfahren nach Anspruch 1,
**dadurch gekennzeichnet, daß**
die progressiven Bilder der Ausgangsbildfolge (A, B, Γ, Δ) Zeilen einer ersten (1, 3, 5, ...) und Zeilen einer zweiten (2, 4, 6, ...) Rasterlage aufweisen und daß aufeinanderfolgende Halbbilder der Zwischenbildfolge (α, β, γ, δ) jeweils nur Zeilen verschiedener Rasterlage aufweisen.

3. Verfahren nach Anspruch 1 oder 2,
**dadurch gekennzeichnet, daß**
je ein Bild der Zwischenbildfolge und der Ausgangsbildfolge einer Bewegungsphase eines der Bilder der Eingangsbildfolge zuordenbar sind (α, A, A1; γ, Γ, B1) und je ein weiteres Bild der Zwischenbildfolge und der Ausgangsbildfolge einer zwischen diesen Bewegungsphasen liegenden weiteren Bewegungsphase (β, B; δ, Δ), daß die Zeilen eines Bildes der Zwischenbildfolge in die Zeilen der entsprechenden Rasterlage des jeweiligen Bildes der Ausgangsbildfolge der gleichen Bewegungsphase übernommen werden (100, ..., 104) und daß einer der Bildpunkte (105, 107, 111, 125, 131, 135) der Zeilen der anderen Rasterlage dieses Bildes der Ausgangsbildfolge mittels der Medianfilterung (106, 118, 112, 126, 132, 139) erhalten wird, der eingangsseitig mindestens ein Bildpunkt einer dem zu erzeugenden Bildpunkt lagemäßig benachbarten Zeile (116, 117, 109, 110, 113, 114, 127, 133, 136) des Bildes der gleichen Bewegungsphase der Zwischenbildfolge (α, β, γ, δ) zugeführt wird sowie ein Bildpunkt (108, 117, 115, 128, 134, 137) an einer der dem zu erzeugenden Bildpunkt lagemäßig entsprechenden Stelle desjenigen Bildes der Eingangsbildfolge (A1, B1, A2), das in der Bewegungsphase dem Bild der Ausgangsbildfolge am nächsten liegt.

4. Verfahren nach Anspruch 3,
**dadurch gekennzeichnet daß**
die Bildfolgen (A1, B1, A2; α, β, γ, δ; A, B, Γ, Δ) in je eine Bildfolge mit einem Höhensignalanteil, der die hochfrequenten Bildanteile enthält, und einem Tiefensignalanteil, der die niedrigfrequenten Bildanteile enthält, aufgetrennt wird, daß für den Höhensignalanteil bei der Filterung (126, 132, 139) diejenigen Bildpunkte (128, 134, 137) aus der Eingangsbildfolge (A1, B1, A2), die im Vergleich zum zu erzeugenden Bildpunkt gleiche Rasterlage aufweisen, eingangsseitig höher gewichtet werden, wenn Bewegung festgestellt wird, als im Vergleich dazu, wenn keine Bewegung festgestellt wird.

5. Verfahren nach Anspruch 4,
**dadurch gekennzeichnet, daß**
der Medianfilterung für den Höhensignalanteil (126, 132, 139) ein erster Bildpunkt zugeführt wird, der dem in der Bewegungsphase zugeordneten Halbbild der Zwischenbildfolge (α, β, γ, δ) an der dem zu erzeugenden Bildpunkt des Ausgangsbilds lagemäßig benachbarten Zeile (127, 133, 136) entnommen ist, ein zweiter Bildpunkt (128, 134, 137), der dem in der Bewegungsphase dem Bild der Ausgangsbildfolge (A, B, Γ, Δ), am nächsten liegenden Halbbild der Eingangsbildfolge (A1, B1, A2) an der dem zu erzeugenden Bildpunkt lagemäßig entsprechenden Stelle entnommen ist, sowie dieser zweite Bildpunkt (128, 134, 137), wenn keine Bewegung festgestellt wird, und ein fester Wert ("0"), wenn Bewegung festgestellt wird.

6. Schaltungsanordnung zum Umsetzen einer Eingangsbildfolge aus zeilenverkämmten Halbbildern (A1, B1, A2) mit einer ersten Wiederholfrequenz auf eine Ausgangsbildfolge (A, B, Γ, Δ) aus progressiven Bildern mit einer zweiten, im Vergleich zur ersten Wiederholfrequenz verdoppelten Wiederholfrequenz, umfassend:
- ein Mittel zum Zuführen eines Eingangsvideosignals (Q), das die Eingangsbildfolge (A1, B1, A2) aus zeilenverkämmten Halbbildern mit der ersten Wiederholfrequenz enthält,
- ein Mittel (1, 2, 3) zum Umsetzen des Eingangsvideosignals (Q) auf ein Zwischenvideosignal (Q3), das eine Zwischenbildfolge (α, β, γ, δ) aus zeilenverkämmten Halbbildern mit der zweiten Wiederholfrequenz enthält, wobei zu jedem Eingangsbild (A1; B1) zwei Zwischenbilder (α, β; γ, δ) erzeugt werden, von denen eines (α, γ) aus dem Eingangsbild (A1, B1) gebildet wird und das andere (β) durch eine Medianfilterung zweier aufeinander folgender Eingangshalbbilder (A1, B1) gebildet wird,
- ein Mittel (4) zum Erzeugen eines Ausgangsvideosignals (Q4), das das die Ausgangsbildfolge (A, B, Γ, Δ) aus den progressiven Bildern enthält, aus dem Eingangsvideosignal (Q) und dem Zwischenvideosignal (Q3) unter Verwendung einer eine Medianfilterung umfassenden Filtermaßnahme.

7. Schaltungsanordnung nach Anspruch 7,
**gekennzeichnet durch**
ein erstes Bildspeichermittel (1) , dem das Eingangsvideosignal (Q) zuführbar ist, an dem ausgangsseitig ein Videosignal (Q2) mit der verdoppelten Bildwiederholfrequenz abgreifbar ist, und ein zweites, dem ersten nachgeschaltetes Bildspeichermittel (2), an dem ein um ein Halbbild verzögertes Videosignal (Q2) abgreifbar ist, ein Mittel (3), das eingangsseitig mit den Ausgängen der Bildspeichermittel (1, 2) verbunden ist und **durch** das das Zwischenvideosignal (Q3) erzeugt wird, wobei das Mittel (4) zum Erzeugen des Ausgangsvideosignals eingangsseitig mit den Ausgängen der Bildspeichermittel (1, 2) verbunden ist und dem Ausgang des unmittelbar vorgenannten Mittels (3) .

## Claims

1. A method for converting an input image sequence (Q) composed of line-interlaced fields (A1, B1, A2) having a first repetition frequency into an output picture sequence (Q4) composed of progressive images (A, B, r, ) having a second repletion frequency which is double the first repetition frequency, in which
- from the input image sequence (A1, B1, A2) an intermediate image sequence (α, β, γ, δ) composed of line-interlaced fields having the second repetition frequency is formed, for each input image (A1; B1) two intermediate images (α, β; γ, δ) being generated, wherein one of which (α; γ) is formed from the input image (A1 B1) and the other of which (β) is formed by a median filtering of two successive input fields (A1, B1),
- from the fields of the intermediate image sequence (α, β, γ, δ) and the fields of the input image sequence (A1, B1, A2) the progressive images of the output image sequence (A, B, Γ, ) are formed by a filter measure comprising a median filtering.

2. A method according to Claim 1,
**characterised in that** the progressive images of the output image sequence (A, B, Γ, ) comprise lines of a first (1, 3, 5, ...) raster position and lines of a second (2, 4, 6, ...) raster position and **in that** successive fields of the intermediate image sequence (α, β, γ, δ) in each case only comprise lines of a different raster position.

3. A method according to Claim 1 or 2,
**characterised in that** one image of the intermediate image sequence and of the output image sequence can be assigned to a movement phase of one of the images of the input image sequence (α, A, A1; γ, Γ, B1) and another image of the intermediate image sequence and of the output image sequence to a further movement phase (β, B; δ, ) lying between these movement phases,
**in that** the lines of an image of the intermediate image sequence are transferred into the lines of the corresponding raster position of the respective image of the output image sequence of the same movement phase (100, ..., 104)
and **in that** one of the picture elements (105, 107, 111, 125, 131, 135) of the lines of the other raster position of this image of the output image sequence is obtained by means of median filtering (106, 118, 112, 126, 132, 139), to which, at the input side, at least one picture element of a line (116, 117, 109, 110, 113, 114, 127, 133, 136) that is positionally adjacent to the picture element to be generated, in the image of the same movement phase of the intermediate image sequence (α, β, γ, δ) is supplied, as well as a picture element (108, 117, 115, 128, 134, 137) at a point postionally corresponding to the picture element to be generated, **in that** image of the input image sequence (A1, B1, A2) which, in the movement phase, is closest to the image of the output image sequence.

4. A method according to Claim 3,
**characterised in that** the image sequences (A1, B1, A2; α, β, γ, δ; A, B, Γ, ) is split into an image sequence having a high signal component containing the high-frequency image components and a low signal component containing the low-frequency image components,
**in that**, for the high signal component, during filtering (126, 132, 139) those picture elements (128, 134, 137) from the input image sequence (A1, B1, A2) that have the same raster position in comparison with the picture element to be generated are weighted more highly on the input side if movement is ascertained as compared to when no movement is ascertained.

5. A method according to Claim 4,
**characterised in that** for the median filtering for the high signal component (126, 132, 139) the following are supplied: a first picture element, which is taken from the field, assigned in the movement phase, of the intermediate image sequence (α, β, γ, δ) at the line (127, 133, 136) positionally adjacent to the picture element of the output image to be generated; a second picture element (128, 134, 137), which is removed from the field of the input image sequence (A1, B1, A2) that is closest to the image of the output image sequence (A, B, Γ, ) in the movement phase, at the point positionally corresponding to the picture element to be generated; and also this second picture element (128, 134, 137) when no movement is ascertained, and a fixed value ("0") when movement is ascertained.

6. A circuit configuration for converting an input image sequence composed of line-interlaced fields (A1, B1, A2) having a first repetition frequency into an output image sequence (A, B, r, ) composed of progressive pictures having a second repetition frequency which is double the first repetition frequency, comprising:
- a means for supplying an input video signal (Q), which contains the input image sequence (A1, B1 A2) composed of line-interlaced fields having the first repetition frequency,
- a means (1, 2, 3) for converting the input video signal (Q) into an intermediate video signal (Q3), which contains an intermediate image sequence (α, β; γ, δ) composed of line-interlaced fields having the second repetition frequency, wherein for each input image (A1; B1) two intermediate images (α, β; γ, δ) are generated, one of which (α, γ) is formed from the input image (A1, B1) and the other (β) is formed by a median filtering of two successive input fields (A1, B1),
- a means (4) for generating an output video signal (Q4) which contains the output image sequence (A, B, r, ) from the progressive images, from the input video signal (Q) and the intermediate video signal (Q3) using a filter measure comprising a median filtering.

7. A circuit configuration according to Claim 7,
**characterised by** a first image memory means (1), to which the input video signal (Q) can be supplied, at which a video signal (Q2) can be tapped at the output side at double the frame frequency, and a second image memory means (2) connected after the first, at which a video signal (Q2) delayed by half a field can be tapped, a means (3), which at the input side is connected to the outputs of the image memory means (1, 2) and by which the intermediate video signal (Q3) is generated, wherein the means (4) for generating the output video signal is connected on the input side to the outputs of the image memory means (1, 2) and the output of the means (3) mentioned directly before.

## Revendications

1. Procédé pour convertir une cadence d'images d'entrée (Q) provenant de demi-images imbriquées ligne par ligne (A1, B1, A2) avec une première fréquence de répétition en une cadence d'images de sortie (Q4) provenant d'images progressives (A, B, Γ, Δ) avec une seconde fréquence de répétition, doublée comparativement à la première fréquence de répétition, dans lequel
- à partir de la cadence d'images d'entrée (A1, B1, A2), on forme, avec la seconde fréquence de répétition, une cadence d'images intermédiaires (α, β, γ, δ) provenant de demi-images imbriquées ligne par ligne, en produisant pour chaque image d'entrée (A1, B1) deux images intermédiaires (α, β, γ, δ), dont une (α,γ) est formée à partir d'une image d'entrée (A1, B1) et dont l'autre (β) est formée par un filtrage médian de deux demi-images d'entrée (A1, B1) consécutives,
- à partir des demi-images de la cadence d'images intermédiaires (α, β, γ, δ) et des demi-images de la cadence d'images d'entrée (A1, B1, A2), on forme, par une opération de filtrage comprenant un filtrage médian, les images progressives de la cadence d'images de sortie (A, B, Γ, Δ).

2. Procédé selon la revendication 1,
**caractérisé en ce que**
les images progressives de la cadence d'images de sortie (A, B, Γ, Δ) présentent des lignes d'une première (1, 3, 5, ...) et des lignes d'une seconde (2, 4, 6, ...) trame et les demi-images de la cadence d'images intermédiaires (α, β, γ, δ) ne présentent respectivement que des lignes d'une trame différente.

3. Procédé selon la revendication 1 ou 2,
**caractérisé en ce qu'**
une image de la cadence d'images intermédiaires et de la cadence d'images de sortie peut être respectivement associée à une phase de mouvement d'une des images de la cadence d'images d'entrée (α, A, A1 ; γ, Γ, B1) et une autre image de la cadence d'images intermédiaires et de la cadence d'images de sortie respectivement à une autre phase de mouvement (β, B ; δ, Δ) située entre ces phases de mouvement, les lignes d'une image de la cadence d'images intermédiaires sont reprises (100, ..., 104) dans les lignes de la trame correspondante de l'image respective de la cadence d'images de sortie de la même phase de mouvement et **en ce que** l'un des points d'image (105, 107, 111, 125, 131, 135) des lignes de l'autre trame de cette image de la cadence d'images de sortie est obtenu au moyen du filtrage médian (106, 118, 112, 126, 132, 139), le point d'image - au minimum unique, situé côté entrée - d'une ligne (116, 117, 109, 110, 113, 114, 127, 133, 136) adjacente (au point de vue couche) au point d'image à obtenir, de l'image est conduit à la même phase de mouvement de la cadence d'images intermédiaires (α, β, γ, δ) et un point d'image (108, 117, 115, 128, 134, 137) l'est à l'un des emplacements - correspondant (au point de vue couche) au point d'image à obtenir - de l'image de la cadence d'images d'entrée (A1, B1, A2) qui, dans la phase de mouvement, se trouve la plus proche de l'image de la cadence d'images de sortie.

4. Procédé selon la revendication 3,
**caractérisé en ce que**
les cadences d'images (A1, B1, A2 ; α, β, γ, δ ; A, B, Γ, Δ) sont séparées respectivement en une cadence d'images ayant une proportion de signaux hauts, qui contient les proportions d'images haute fréquence, et une ayant une proportion de signaux bas qui contient les proportions d'images basse fréquence, et pour la proportion de signaux hauts, lors du filtrage (126, 132, 139), les points d'image (128, 134, 137) provenant de la cadence d'images d'entrée (A1, B1, A2) qui, comparativement au point d'image à obtenir, présentent la même trame, sont pondérés côté entrée si un mouvement est constaté, comparativement que plus fortement si aucun mouvement n'est constaté.

5. Procédé selon la revendication 4,
**caractérisé en ce que**
pour la proportion de signaux hauts (126, 132, 139), on amène au filtrage médian un premier point d'image prélevé de la demi-image, associée dans la phase de mouvement de la cadence d'images intermédiaire (α, β, γ, δ), sur la ligne (127, 133, 136) la plus proche dans la trame du point d'image à obtenir de l'image de sortie, un second point d'image (128, 134, 137) prélevé de la demi-image - située le plus près de l'image de la cadence d'images de sortie (A, B, Γ, Δ) dans la phase de mouvement - de la cadence d'images d'entrée (A1, B1, A2) à l'emplacement, correspondant dans la trame, au point d'image à obtenir, ainsi que ce second point d'image (128, 134, 137) si aucun mouvement n'est constaté et une valeur fixe ("0") si un mouvement est constaté.

6. Dispositif de montage pour convertir une cadence d'images d'entrée provenant de demi-images imbriquées ligne par ligne (A1, B1, A2) avec une première fréquence de répétition en une cadence d'images de sortie (A, B, Γ, Δ) provenant d'images progressives avec une seconde fréquence de répétition, doublée comparativement à la première fréquence de répétition, comprenant :
- un moyen pour l'amenée d'un signal vidéo d'entrée (Q) qui contient la cadence d'images d'entrée (A1, B1, A2) provenant de demi-images imbriquées ligne par ligne, avec la première fréquence de répétition,
- un moyen (1, 2, 3) pour la conversion du signal vidéo d'entrée (Q) en un signal vidéo intermédiaire (Q3) qui contient une cadence d'images intermédiaire (α, β, γ, δ) provenant de demi-images imbriquées ligne par ligne avec la seconde fréquence de répétition, en produisant pour chaque image d'entrée (A1, B1) deux images intermédiaires (α, β, γ, δ), dont une (α,γ) est formée à partir de l'image d'entrée (A1, B1) et dont l'autre (β) est formée par un filtrage médian de deux demi-images d'entrée (A1, B1) consécutives,
- un moyen (4) pour la production d'un signal vidéo de sortie (Q4). qui contient la cadence d'images de sortie (A, B, Γ, Δ) provenant des images progressives, à partir du signal vidéo d'entrée (Q) et du signal vidéo intermédiaire (Q3) en utilisant une opération de filtrage comprenant un filtrage médian.

7. Dispositif de montage selon la revendication 6,
**caractérisé par**
un premier moyen d'enregistrement d'images (1), auquel on peut amener le signal vidéo d'entrée (Q), sur lequel - côté sortie - un signal vidéo (Q2) peut être prélevé avec la fréquence de répétition d'image doublée, et un second moyen d'enregistrement d'images (2) monté en aval du premier, sur lequel on peut prélever un signal vidéo (Q2) temporisé d'une demi-image, un moyen (3) qui est - côté entrée - relié avec les sorties des moyens d'enregistrement d'images (1, 2) et par lequel le signal vidéo intermédiaire (Q3) est produit, le moyen (4) pour produire le signal vidéo de sortie étant - côté entrée - relié avec les sorties des moyens d'enregistrement d'images (1, 2) et la sortie du moyen (3) immédiatement précité.
